# FASCICULE DE BREVET EUROPEEN

(11) **EP 3 659 193 B1**
(45) Date de publication et mention de la délivrance du brevet: **21.07.2021**
(21) Numéro de dépôt: 18759161.5
(22) Date de dépôt: 25.07.2018
(51) Int. Cl.: H01M 4/04, B82B 3/00, H01M 4/134, H01M 4/1395, H01M 4/36, H01M 10/052

(54) **MATÉRIAU NANOSTRUCTURÉ ET SON PROCÉDÉ DE PRÉPARATION**
NANOSTRUKTURIERTER WERKSTOFF UND SEIN HERSTELLUNGSVERFAHREN
NANOSTRUCTURED MATERIAL AND ITS MANUFACTURING METHOD

(30) Priorité: 28.07.2017 FR 1757194
(43) Date de publication de la demande: 03.06.2020
(73) Titulaire: Enwires, 38420 Domene (FR)
(72) Inventeur: BURCHAK, Olga, 38240 Meylan (FR); PUECH, Laurent, 38240 Meylan (FR)
(74) Mandataire: Corizzi, Valérie
(86) Numéro de dépôt international: PCT/FR2018/051904
(87) Numéro de publication internationale: WO 2019/020938

(56) Documents cités:
- CN-A- 101 901 897
- KR-A- 20130 074 826
- US-A1- 2016 285 083
- HAFIZ J ET AL: "Nanoparticle-Coated Silicon Nanowires", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, vol. 8, no. 6, 22 juillet 2006 (2006-07-22), pages 995-1002, XP019452997, ISSN: 1572-896X, DOI: 10.1007/S11051-006-9111-8
- VINCENT LE BORGNE ET AL: "Structural and photoluminescence properties of silicon nanowires extracted by means of a centrifugation process from plasma torch synthesized silicon nanopowder", NANOTECHNOLOGY, IOP, BRISTOL, GB, vol. 28, no. 28, 23 juin 2017 (2017-06-23) , page 285702, XP020317723, ISSN: 0957-4484, DOI: 10.1088/1361-6528/AA7769 [extrait le 2017-06-23]

## Description

### Domaine technique

La présente invention concerne un procédé de préparation d'un matériau comprenant au moins des particules de silicium et des nanofils de silicium. L'invention concerne également un matériau susceptible d'être obtenu par la mise en œuvre de ce procédé ainsi que son utilisation dans un dispositif de stockage d'énergie.

### Etat de la technique antérieure

Une batterie lithium-ion est constituée dans sa version usuelle, d'une électrode positive (cathode) recouvrant un collecteur de courant en aluminium, de feuillets de séparateurs perméables à un électrolyte liquide et d'une électrode négative (anode) recouvrant un collecteur de courant en cuivre. L'électrode positive est généralement composée d'un matériau actif d'où l'on peut extraire ou insérer des ions lithium, par exemple du dioxyde de cobalt et de lithium LiCoO₂ ou du phosphate de fer et de lithium LiFePO₄, d'un additif pour la conduction électronique, comme du noir de carbone, et d'un liant. Le ou les séparateurs baignent dans un électrolyte liquide, généralement une solution d'un sel de lithium, par exemple d'hexafluorophosphate de lithium LiPF₆, dans un solvant organique, lui-même en contact avec les deux électrodes. L'électrode négative est quant à elle constituée d'un matériau actif d'où l'on peut extraire ou insérer des ions lithium et présente une différence de potentiel significative avec le matériau actif de l'électrode positive, par exemple du graphite, et d'un liant.

L'augmentation de la capacité et de la puissance des batteries lithium-ion actuelles passe par l'utilisation de nouveaux matériaux d'électrodes, comme l'oxyde de vanadium V₂O₅ ou le souffre à la place des matériaux de cathodes usuels et le silicium à la place du graphite des anodes. En particulier, le silicium présente une capacité théorique en masse près de dix fois plus élevée que celle du graphite, respectivement 3579 mA.h/g et 372 mA.h/g. Il est régulièrement avancé que l'utilisation d'une anode à base de silicium à la place d'une anode à base de graphite permettrait un doublement de la capacité d'une cellule avec les matériaux de cathode actuels.

Toutefois, le principal frein à l'utilisation du silicium est sa forte variation de volume pendant les cycles de charge/décharge : une expansion volumique supérieure à 300% lors de l'insertion du lithium dans le silicium est régulièrement rapportée. Typiquement, dans le cas d'un matériau massif, il en résulte une dégradation du matériau d'anode, ce qui entraîne un développement excessif de l'interphase solide-électrolyte (SEI), ainsi qu'une rupture de la continuité de la conduction électronique dans l'électrode. Le développement de la SEI consomme des ions lithium issus de la cathode. Il en résulte, au fur et à mesure des cycles, une baisse de la capacité de l'anode, ainsi qu'une baisse des performances de stockage de la batterie. De la même manière, la rupture de continuité électronique dans l'anode isole une partie du matériau actif, ce qui abaisse la capacité de l'anode et les performances de la batterie.

En réponse à ce problème technique, le document C.K. Chan et al., Nat Nano, 3(1):31-35, 2008 décrit l'utilisation de silicium sous la forme de matériaux nanométriques, notamment de nanofils. Grâce à leur facteur de forme élevé, l'expansion volumique des nanofils lors de la lithiation se fait perpendiculairement à leur axe. Leurs diamètres nanométriques, typiquement de quelques dizaines de nm, leur permettent ainsi de résister aux contraintes mécaniques générées. De plus, la conservation de leur intégrité sur une longueur de plusieurs µm assure une continuité électronique lors des cycles de charge et de décharge.

À l'opposé des nanofils, les particules de silicium de taille supérieure à 100 nm sont largement disponibles, avec des caractéristiques en termes de dimension, de densité gravimétrique, de surface spécifique, de dopage, etc., aisément adaptables pour une intégration industrielle en électrode de batterie lithium-ion. Toutefois, leurs performances en cyclage restent limitées à cause de l'expansion volumique du silicium.

Le document J.C. Chan et al., Solid-State Electron, 54(10):1185-1191, 2010, décrit la croissance de nanofils de silicium à la surface de substrats sacrificiels par traitement thermique sous pression réduite. L'élimination du substrat sacrificiel est difficile à mettre en œuvre et représente une étape supplémentaire dans un procédé industriel.

Le document WO 2016/162540 décrit la fabrication de nanofils de silicium à la surface de substrats carbonés conducteurs. Cependant, les matériaux obtenus (5-10% de nanofils de silicium en masse) présentent des propriétés électrochimiques limitées, avec une capacité réduite par rapport à la capacité des matériaux carbonés (noir de carbone, graphite).

Le document WO 2012/175998 divulgue des particules de silicium comprenant un cœur d'où partent des bâtonnets de silicium. Ces matériaux sont obtenus par gravure de particules de silicium de taille micrométrique. Cette technique de gravure est basée sur l'utilisation de bains d'acide fluorhydrique HF, difficilement conciliable avec des pratiques environnementalement acceptables. Les matériaux obtenus ont une structure radiale, dans laquelle les bâtonnets sont liés au cœur par des liaisons chimiques. La longueur des bâtonnets est limitée par la taille des particules initiales.

Le document US 2008/0261112 décrit également la croissance de nanofils de silicium à la surface de particules de silicium par traitement plasma. Le procédé décrit dans US 2008/0261112 se fonde sur la croissance de nanofils de silicium à partir du matériau des particules comme matériau précurseur. Le ratio nanofils/particules ne peut excéder une certaine limite, au risque de détruire les particules. Ce mode de croissance favorise la formation de nanofils chimiquement liés aux particules.

Le document CN101901897 décrit un nano matériau composite ternaire pour batteries lithium ion, qui comprend des nanofils de silicium, des nanoparticules de silicium et des nanoparticules d'or. Il est préparé par un procédé qui comprend l'introduction d'un support et de nanoparticules d'or dans un réacteur, la formation d'un eutectique binaire silicium-or, puis la formation du matériau ternaire par traitement de l'eutectique au moyen d'un gaz de type silane à 400°C. Le matériau obtenu forme une structure continue en raison de la fusion des particules d'or et du silicium.

Le document KR20130074826 décrit un matériau d'anode à base de silicium nanostructuré. Le procédé de fabrication de ce matériau comprend le dépôt d'un catalyseur métallique à la surface d'une nanoparticule de silicium, et la croissance de la nanostructure à base de silicium à partir de la surface des nanoparticules à une température allant de 900 à 1300°C. Le mode de croissance entraine la formation de nanofils liés par leur extrémité aux nanoparticules.

Le document Hafiz et al., Journal of nanoparticle research, Vol.8, n°6, 995-1002 décrit la synthèse de nanofils de silicium recouverts de nanoparticules de silicium par un procédé de dépôt hypersonique des particules de plasma. Chaque nanofil porte à son extrémité une particule de TiSi₂.

Le document V. Le Borgne et al., Nanotechnology, Vol.28, N°28, p.285702 décrit l'extraction de nanofils de silicium à partir d'un composite avec des nanoparticules de silicium, formé par un procédé de torche à plasma. Le produit obtenu est un mélange dans lequel les nanofils sont liés par leur extrémité à une nanoparticule. Le mélange est soumis à un traitement de sonication à très forte puissance et sur une longue durée puis à une étape de centrifugation qui permet de séparer les nanoparticules et les nanofils.

Le document US2010/202952 décrit un procédé de préparation de nanofils de silicium qui comprend le revêtement de nanoparticules de silicium par des particules de catalyseur puis le chauffage de ce matériau de façon à former un eutectique. Le mélange fondu est chauffé à une très haute température (900 à 1050°C) en présence d'une source de silicium. Le produit final ne comprend pas de nanoparticules de silicium.

Le document US2016/285083 décrit un procédé de fabrication de nanofils de silicium comprenant la croissance de nanofils à partir de nano ou de microparticules de silicium par application d'un traitement thermique à une température de 300°C à 2000°C. Le matériau obtenu ne comprend pas de nanoparticules résiduelles.

Toutefois, les performances de ces matériaux après cyclage ne sont pas totalement satisfaisantes.

Aucun de ces procédés ne permet de former un matériau dans lequel les nanofils sont liés aux particules par des liaisons physiques, plutôt que par des liaisons chimiques.

Tous ces procédés conduisent à des matériaux dans lesquels une partie significative des nanofils de silicium sont liés par au moins une de leurs extrémités à la surface d'une particule de silicium.

De plus, aucun de ces procédés ne permet l'obtention de matériaux présentant un ratio massique et/ou volumique nanofils/particules élevé.

Enfin, la longueur des nanofils obtenus est limitée du fait des procédés de fabrication proposés.

Il subsiste donc le besoin d'un procédé permettant la préparation de matériaux à base de particules de silicium et de nanofils de silicium présentant un ratio nanofils/particules élevé.

Il subsiste également le besoin d'un procédé permettant la préparation de matériaux à base de particules de silicium et de nanofils de silicium dans lesquels le rapport d'aspect des nanofils est élevé.

Il subsiste encore le besoin de proposer un procédé de préparation qui soit simple à mettre en œuvre d'un point de vue industriel.

Enfin, il subsiste le besoin de fournir un matériau à base de silicium pouvant être utilisé comme matériau de base pour la fabrication d'électrodes, qui lorsqu'elles sont utilisées au sein d'un dispositif de stockage d'énergie, présentent une cyclabilité améliorée.

### Résumé de l'invention

L'invention concerne un procédé de préparation d'un matériau comprenant au moins des particules de silicium et des nanofils de silicium, ledit procédé comprenant au moins les étapes suivantes :
(1) l'introduction dans une enceinte d'un réacteur d'au moins :
   - des particules de silicium, et
   - un catalyseur,
(2) l'introduction dans l'enceinte du réacteur d'une composition précurseur des nanofils de silicium,
(3) la diminution de la teneur en dioxygène dans l'enceinte du réacteur,
(4) l'application d'un traitement thermique à une température allant de 270°C à 600°C sur une durée allant de 1 minute à 5 heures, et
(5) la récupération du produit.

Le traitement thermique est réalisé à une température allant de 270°C à 600°C, de préférence de 350°C à 550°C, encore plus préférentiellement de 400°C à 500°C.

De préférence, à l'étape (2), la composition précurseur des nanofils de silicium comprend au moins un composé précurseur des nanofils de silicium choisi parmi un composé silane ou un mélange de composés silanes.

Selon un mode de réalisation, le procédé selon l'invention comprenant en outre une étape (6) de lavage du produit obtenu à l'issue de l'étape (5).

De préférence, les particules de silicium de l'étape (1) sont recouvertes par une couche d'oxyde de silicium.

Selon un mode de réalisation, le procédé selon l'invention comporte après l'étape (5) ou après l'étape (6) l'application d'au moins un cycle suivant :
(1') l'introduction dans l'enceinte du réacteur d'au moins :
   - le produit obtenu à l'étape (5) ou à l'étape (6), et
   - un catalyseur,
(2') l'introduction dans le réacteur d'une composition précurseur des nanofils de silicium,
(3') la diminution de la teneur en dioxygène dans l'enceinte du réacteur, et
(4') l'application d'un traitement thermique, et
(5') la récupération du produit.

De préférence, le traitement thermique (4') est réalisé à une température allant de 270°C à 600°C, de préférence de 350°C à 550°C, encore plus préférentiellement de 400°C à 500°C.

De préférence, à l'étape (2'), la composition précurseur des nanofils de silicium comprend au moins un composé précurseur des nanofils de silicium choisi parmi un composé silane ou un mélange de composés silanes.

De préférence, le procédé selon l'invention comporte l'application de 1 à 10 cycles, de préférence de 1 à 5 cycles, et encore plus préférentiellement de 1 à 2 cycles.

Selon une variante, le procédé comporte une étape supplémentaire de traitement thermique du mélange final de particules et de nanofils de silicium en présence d'une source de carbone.

L'invention concerne également un matériau susceptible d'être obtenu par la mise en œuvre du procédé selon l'invention et dans lequel au moins 10% des nanofils de silicium ne sont pas liés par leurs extrémités à la surface d'une particule de silicium, de préférence au moins 25%, et encore plus préférentiellement au moins 50%.

De préférence, dans le matériau susceptible d'être obtenu par la mise en oeuvre d'un procédé selon l'invention, au moins 50% des nanofils de silicium ont une longueur strictement supérieure à 5 µm, de préférence supérieure ou égale à 10 µm, et encore plus préférentiellement supérieure ou égale à 15 µm.

De préférence, dans le matériau susceptible d'être obtenu par la mise en oeuvre d'un procédé selon l'invention, le rapport entre la longueur moyenne et le diamètre moyen des nanofils de silicium est de 250 à 10 000, de préférence de 500 à 5 000.

De préférence, dans le matériau susceptible d'être obtenu par la mise en œuvre du procédé selon l'invention, au moins 50 % des nanofils de silicium ne sont pas liés chimiquement à la surface des particules de silicium.

De préférence, dans le matériau susceptible d'être obtenu par la mise en œuvre du procédé selon l'invention, le rapport entre la longueur moyenne des nanofils de silicium et le diamètre moyen des particules de silicium est supérieur ou égal à 2, préférentiellement supérieur ou égal à 5, encore plus préférentiellement supérieur ou égal à 10, et avantageusement supérieur ou égal à 20.

L'invention a également pour objet une électrode utilisable dans un dispositif de stockage d'énergie comprenant au moins un collecteur de courant et une couche de matière active, la couche de matière active comprenant au moins un liant et un matériau selon l'invention.

L'invention concerne enfin un dispositif de stockage d'énergie comprenant au moins une électrode selon l'invention.

L'objet de la présente invention consiste en un matériau actif à base de silicium obtenu par croissance de nanofils de silicium sur une pluralité de particules de silicium. Ce matériau présente une cyclabilité améliorée, c'est-à-dire qu'il conserve une capacité énergétique élevée lors des lithiations/délithiations successives, lorsque ce matériau est utilisé comme matériau actif d'une électrode.

Le matériau se présente comme une pluralité de nanofils de silicium associée à une pluralité de particules de silicium, pour l'essentiel de manière tangente à la surface des particules. De plus, les nanofils ne sont pas chimiquement soudés, mais physiquement en contact avec une ou plusieurs particules et/ou d'autres nanofils, ce qui donne plus de souplesse à l'ensemble nanofils/particules en fonctionnement, notamment lors des cycles de lithiation/délithiation et permet d'éviter une dégradation du matériau due aux variations volumiques du silicium.

La première conséquence de la présence des nanofils est le développement considérable de la surface du matériau actif par rapport aux particules sans nanofils. De plus, le fait que les nanofils soient en grande partie tangents aux particules rend leurs surfaces très accessibles. Ainsi, le matériau actif présente une surface extrêmement développée et une porosité très ouverte à un électrolyte liquide.

La deuxième conséquence est la continuité de la connectivité électronique dans le matériau actif grâce aux multiples contacts des nanofils entre eux et avec les particules. Cette configuration permet, avec l'ajout d'un additif conducteur, comme par exemple le noir de carbone, une connexion électronique entre le collecteur de courant et l'ensemble du matériau actif.

La troisième conséquence est la possibilité pour le matériau actif de changer de volume lors des lithiations/délithiations successives sans perdre cette connexion électronique. Les variations du volume des nanofils perpendiculairement à leurs axes maintiennent la continuité électronique sur leur longueur au cours du cyclage, et les contacts physiques entre nanofils et particules sont en mesure de relaxer les contraintes mécaniques et de s'adapter au gonflement, à l'opposé des liaisons chimiques fortes présentes dans les matériaux obtenus par les procédés de l'art antérieur.

Ces trois points procurent un bénéfice en termes de cyclabilité : les deux premiers permettent une répartition optimale du flux d'ions lithium, de la variation du volume et des contraintes mécaniques à l'ensemble du matériau actif, et le troisième permet la conservation de cet avantage aux cours du cyclage.

Les particules de silicium permettent d'adapter un certain nombre de caractéristiques du matériau actif : la densité en masse, la surface spécifique, ainsi que le coût, selon les caractéristiques et le ratio des particules dans le matériau actif. Ces caractéristiques conditionnent notamment l'aptitude à la dispersion du matériau actif, et donc son intégration industrielle. Il est également possible de choisir des particules de silicium dopées (B, P, etc.), avec une conductivité électronique optimale.

### Description détaillée

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

La présente invention concerne un procédé de préparation d'un matériau nanostructuré à base de silicium.

Par « matériau nanostructuré », on entend au sens de l'invention un matériau contenant des particules libres, sous forme d'agrégats ou sous forme d'agglomérats dont au moins 5% en masse desdites particules par rapport à la masse totale du matériau ont au moins une de leurs dimensions externes allant de 1 nm à 100 nm, de préférence au moins 10%.

L'invention concerne plus particulièrement un procédé de préparation d'un matériau comprenant au moins des particules de silicium et des nanofils de silicium, ledit procédé comprenant au moins les étapes suivantes :
(1) l'introduction dans une enceinte d'un réacteur d'au moins :
   - des particules de silicium, et
   - un catalyseur,
(2) l'introduction dans l'enceinte du réacteur d'une composition précurseur des nanofils de silicium,
(3) la diminution de la teneur en dioxygène dans l'enceinte du réacteur,
(4) l'application d'un traitement thermique à une température allant de 270°C à 600°C sur une durée allant de 1 minute à 5 heures, et
(5) la récupération du produit.

Par « particule de silicium », on entend au sens de l'invention une particule de silicium dont au moins une des dimensions externes est de 50 nm à 50 µm, de préférence de 0,1 µm à 10 µm.

Les dimensions externes des particules peuvent être évaluées de façon connue par tamisage ou par l'analyse de clichés obtenus par microscopie électronique à balayage (MEB) de ces particules, ou par diffraction LASER.

Par « nanofil », on entend au sens de l'invention un élément allongé dont la forme est semblable à celle d'un fil et dont le diamètre est nanométrique. De préférence, les nanofils de silicium ont un diamètre allant de 1 nm à 100 nm, plus préférentiellement allant de 10 nm à 100 nm, et encore plus préférentiellement allant de 10 nm à 50 nm.

### Les particules de silicium

Le procédé selon l'invention comprend une étape d'introduction dans une enceinte d'un réacteur de particules de silicium.

Par « particules de silicium », on entend au sens de l'invention des particules constituées d'un matériau comprenant au moins du silicium.

Selon un mode de réalisation, les particules de silicium comprennent d'autres éléments que le silicium.

Ces autres éléments constituent alors des impuretés au sein des particules de silicium. Ces impuretés sont notamment : de l'oxyde de silicium SiO₂ ; du soufre ; des carbures comme les carbures de silicium SiC ; des métaux comme le magnésium Mg, le calcium Ca, le nickel Ni, le fer Fe, le cuivre Cu, l'étain Sn, l'aluminium Al ; leurs oxydes comme l'oxyde de magnésium MgO ou encore l'oxyde de calcium CaO ; et leurs mélanges.

De préférence, les particules de silicium comprennent au moins 50% en masse de silicium par rapport à la masse totale des particules, de préférence au moins au 75%, de préférence au moins 90%, plus préférentiellement au moins 95%.

Selon un mode de réalisation préféré, les particules de silicium sont essentiellement constituées de silicium, encore mieux, elles sont exclusivement constituées de silicium.

La surface des particules de silicium utilisées dans le procédé de l'invention est généralement revêtue d'une couche d'oxyde native (teneur en oxygène variable). Cette couche existe sur toutes les surfaces des particules de silicium qui ont été exposées à l'atmosphère ambiante, comme les particules de silicium disponibles commercialement. De telles particules répondent à la définition de particules « essentiellement constituées de silicium » et de particules « exclusivement constituées de silicium » au sens de l'invention.

L'oxydation de surface des particules de silicium est décrite notamment dans D.-Q. Yang et al., Journal of Applied Physics 97, 024303 (2005) ; M. Morita et al., Journal of Applied Physics 68, 1272 (1990) ; doi: 10.1063/1.347181 ; B. J. Winters J Nanopart Res (2011) 13:5473-5484 ; DOI 10.1007/s11051-011-0535-4.

Selon une variante, les particules de silicium sont dopées.

Par « particules de silicium dopées », on entend au sens de l'invention des particules de silicium dont les propriétés de conductivité ont été améliorées par l'ajout d'un ou plusieurs éléments dits « éléments dopants ».

De préférence, et selon cette variante, l'élément dopant est choisi parmi : le bore B, le phosphore P, l'azote N et leurs mélanges.

De préférence, les particules de silicium comprennent de 10⁻⁴ % à 10% en masse d'éléments dopant par rapport à la masse totale des particules de silicium, de préférence de 10⁻⁴ % à 1%, et encore plus préférentiellement de 10⁻²% à 1%.

Les particules de silicium peuvent être de formes variées.

En particulier, les particules de silicium peuvent être de forme monodimensionnelle, bidimensionnelle ou tridimensionnelle, et plus particulièrement sous la forme de grains, fibres, de feuilles, de solides poreux, etc.

De préférence, les particules de silicium sont sous la forme de grains.

Par « particules sous la forme de grains », on entend au sens de l'invention des particules sous la forme d'un corps sphérique, ou allongé, ou structuré selon une forme souhaitée.

Préférentiellement, le ratio entre la plus petite des dimensions et la plus grande des dimensions des grains est inférieure ou égale à ¼.

Les particules de silicium utilisables selon l'invention ont avantageusement des dimensions allant de 50 nm à 50 µm, de préférence de 0,1 µm à 10 µm, ce qui signifie que la plus grande des dimensions des particules de silicium est de 50 nm à 50 µm, de préférence de 0,1 µm à 10 µm.

### Le catalyseur

Le procédé selon l'invention comprend également l'introduction d'un catalyseur dans l'enceinte du réacteur.

Le catalyseur permet la création de sites de croissance des nanofils à la surface des particules de silicium.

De préférence, le catalyseur est choisi parmi les métaux, les composés bimétalliques, les oxydes métalliques, et les nitrures métalliques.

Parmi les composés bimétalliques, on peut citer notamment les nanoparticules de manganèse et de platine MnPt₃ ou encore les nanoparticules de fer et de platine FePt.

Parmi les composés d'un oxyde métallique, on peut notamment citer les nanoparticules d'oxyde ferrique Fe₂O₃.

De préférence, le catalyseur est choisi parmi les métaux.

Le métal qui formera le catalyseur peut être introduit sous la forme d'une couche mince métallique qui se liquéfie sous l'effet de la chaleur au début du procédé de croissance, puis se détache du substrat en petites gouttelettes de métal. Le métal peut aussi être introduit sous la forme d'une couche de sel métallique adsorbé sur le substrat de croissance, et réduit sous l'effet d'un gaz réducteur comme l'hydrogène au début du procédé de croissance. Dans les procédés pyrolytiques, le métal peut être introduit sous la forme d'un composé organométallique qui se décompose pendant la croissance et dépose le métal sous forme de nanoparticules ou gouttelettes sur le substrat de croissance.

De préférence, le catalyseur est sous la forme de gouttelettes ou de masses solides de taille nanométrique.

Plus préférentiellement, le catalyseur est introduit sous la forme de nanoparticules de métal.

De préférence, le catalyseur est choisi parmi des nanoparticules d'un métal et encore plus préférentiellement parmi des nanoparticules d'or, de cobalt, de nickel, de bismuth, d'étain, de fer, d'indium, d'aluminium, de manganèse, d'iridium, d'argent, de cuivre et leurs mélanges.

De manière encore plus préférée, le catalyseur est choisi parmi les nanoparticules d'or, et avantageusement il est constitué de nanoparticules d'or.

Préférentiellement, les nanoparticules de catalyseur ont leur dimension la plus grande de 1 nm à 100 nm, de préférence de 1 nm à 50 nm, et encore plus préférentiellement de 1 nm à 10 nm.

Avantageusement, les nanoparticules de catalyseur sont sphériques et plus avantageusement elles ont un diamètre inférieur ou égal à 5 nm.

Comme nanoparticules de catalyseur adaptées à l'invention, on peut notamment citer les nanoparticules d'or synthétisées dans M. BRUST et al., J. Chemical Society, Chemical Communications, 7(7) :801-802, 1994.

Préférentiellement, le catalyseur est introduit dans l'enceinte du réacteur selon un ratio molaire par rapport aux particules de silicium allant de 1:70 000 à 1:100, de préférence de 1:10 000 à 1:200, et encore plus préférentiellement de 1:2 000 à 1:300.

Selon un mode de réalisation préféré, les particules de silicium et le catalyseur sont associés avant leur introduction dans le réacteur.

Par « associés », on entend au sens de l'invention que les particules de silicium et le catalyseur ont subi de manière préalable une étape d'association correspondant à la fixation ou au dépôt d'au moins une partie du catalyseur à la surface d'au moins une particule de silicium. En d'autres termes, le catalyseur est au moins en partie lié à la surface d'au moins une particule de silicium, par exemple par liaison physique ou adsorption.

De préférence, au moins 50% des particules de silicium sont associées au catalyseur, de préférence au moins au moins 70%, et encore plus préférentiellement au moins 90%.

L'association du catalyseur aux particules de silicium permet de former une pluralité de sites de croissance des nanofils à la surface des particules de silicium.

### La composition précurseur des nanofils de silicium

Le procédé selon l'invention comprend également l'introduction dans l'enceinte du réacteur d'une composition précurseur des nanofils de silicium.

La composition précurseur des nanofils de silicium comprend au moins un composé précurseur des nanofils de silicium.

Par « composé précurseur des nanofils de silicium », on entend au sens de l'invention un composé susceptible de former des nanofils de silicium à la surface des particules de silicium par la mise œuvre du procédé selon l'invention.

Le composé précurseur des nanofils de silicium est un composé comprenant au moins du silicium.

De préférence, le composé précurseur des nanofils de silicium est un composé silane ou un mélange de composés silanes.

Par « composé silane », on entend au sens de l'invention un composé de formule (I) suivante :

R₁-(SiR₂R₃)ₙ-R₄ (I)

dans laquelle :
- n est un entier allant de 1 à 10, et
- R₁, R₂, R₃ et R₄ sont choisis de manière indépendante parmi un atome d'hydrogène, une chaine alkyle en C₁-C₁₅, un cycle aromatique et un aralkyle comprenant un cycle aromatique et une chaine alkyle en C₁-C₁₅.

Selon une première variante, le composé silane est un composé silane simple de formule (II) suivante :

SiₙH₍₂ₙ₊₂₎ (II)

avec n un entier allant de 1 à 10.

De préférence, et selon cette variante, le composé précurseur des nanofils de silicium est le silane SiH₄.

Selon une variante préférée, le composé silane est un composé silane organique.

Par « composé silane organique », on entend au sens de l'invention un composé silane de formule (I) dans lequel au moins un des groupements R₁, R₂, R₃ et R₄ est différent de l'atome d'hydrogène.

Préférentiellement, n est égal à 1 et le composé silane répond à la formule (III) suivante : 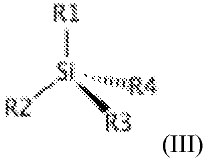 dans laquelle R₁, R₂, R₃ et R₄ sont choisis de manière indépendante parmi un atome d'hydrogène, une chaine alkyle en C₁-C₁₅, un groupement aryle éventuellement substitué par une chaine alkyle en C₁-C₁₅, au moins un des groupements R₁, R₂, R₃ et R₄ est différent de l'atome d'oxygène.

De préférence, les chaines R₁, R₂, R₃ et R₄ sont choisies de manière indépendante parmi un atome d'hydrogène, une chaine alkyle en C₁-C₁₀, un groupement aryle éventuellement substitué par une chaine alkyle en C₁-C₁₀.

Selon un premier mode de réalisation, le composé silane est choisi parmi les mono-, di- et tri-alkylsilanes.

Selon un mode de réalisation préféré, le composé silane est choisi parmi les silanes organiques de formule (III) dans lesquels au moins un des groupements R₁, R₂, R₃ et R₄ est un groupement aryle éventuellement substitué par une chaine alkyle en C₁-C₁₀, de préférence un groupement phényle.

De préférence, et selon ce mode de réalisation, le composé silane est choisi parmi les mono-, di- et tri-arylsilanes.

Plus préférentiellement, selon ce mode de réalisation, le composé silane est choisi parmi : le monophénylsilane Si(C₆H₅)H₃, le diphénylsilane Si(C₆H₅)₂H₂, le triphénylsilane Si(C₆H₅)₃H et leurs mélanges.

Ces composés sont avantageux en ce qu'ils sont stables à l'air et ne nécessitent donc pas de précaution particulière lors de leur manipulation.

Avantageusement, le composé précurseur des nanofils de silicium est le diphénylsilane Si(C₆H₅)₂H₂.

Selon un mode de réalisation, la composition précurseur des nanofils de silicium comprend d'autres composés que le composé précurseur des nanofils de silicium, comme par exemple d'autres composés organométalliques, tel que par exemple le diphényl germanium.

De préférence, la composition précurseur des nanofils de silicium comprend au moins 80% en masse de composé précurseur des nanofils de silicium par rapport à la masse totale de la composition précurseur des nanofils de silicium, de préférence au 90%, encore plus préférentiellement au moins 95%, et encore plus préférentiellement au moins 99%.

Selon un mode de réalisation préféré, la composition précurseur des nanofils de silicium est essentiellement constituée, ou encore mieux, elle est exclusivement constituée d'un ou plusieurs composés précurseurs des nanofils de silicium.

Préférentiellement, le composé précurseur des nanofils de silicium est introduit dans le réacteur selon un ratio massique par rapport aux particules de silicium allant de 1:10 à 1000:10, de préférence de 10:10 à 500:10, et encore plus préférentiellement de 35:10 à 200:10.

### Matériau dopant

Selon un mode de réalisation, le procédé selon l'invention comprend l'introduction dans le réacteur d'au moins un matériau dopant.

Par « matériau dopant », on entend au sens de l'invention un matériau capable de modifier les propriétés de conductivité du silicium. Un matériau dopant au sens de l'invention est par exemple un matériau riche en atomes de phosphore, de bore, ou encore d'azote.

Préférentiellement, et selon ce mode réalisation, le matériau dopant est introduit au moyen d'un précurseur choisi parmi la diphénylphosphine, le triphénylborane, le di- et le triphénylamine.

De préférence, la proportion molaire de matériau dopant par rapport au composé précurseur des nanofils de silicium est de 10⁻⁴ % à 10%, de préférence de 10⁻² % à 1% en moles.

### Procédé de préparation

L'invention concerne un procédé de préparation d'un matériau comprenant au moins des particules de silicium et des nanofils, ledit procédé comprenant au moins les étapes suivantes :
(1)l'introduction dans une enceinte d'un réacteur d'au moins :
   - des particules de silicium, et
   - un catalyseur,
(2)l'introduction dans l'enceinte du réacteur d'une composition précurseur des nanofils de silicium,
(3)la diminution de la teneur en dioxygène dans l'enceinte du réacteur,
(4)l'application d'un traitement thermique à une température allant de 270°C à 600°C sur une durée allant de 1 minute à 5 heures, et
(5)la récupération du produit.

Selon une première variante, la diminution de la teneur en oxygène dans l'enceinte du réacteur est réalisée par la mise sous vide du réacteur, de préférence à une pression inférieure ou égale à 10⁻¹ bar.

Selon une seconde variante, la diminution de la teneur en oxygène dans l'enceinte de réacteur est réalisée par lavage de l'enceinte du réacteur par un gaz inerte.

Par « lavage de l'enceinte du réacteur par un gaz inerte », on entend au sens de l'invention qu'un flux de gaz inerte est injecté dans l'enceinte du réacteur afin de remplacer le gaz présent dans l'enceinte du réacteur par le gaz inerte injecté.

De préférence, le gaz inerte est choisi parmi : le diazote N₂, l'argon Ar et leurs mélanges.

De préférence, l'enceinte du réacteur est lavée au moins deux fois, plus préférentiellement au moins trois fois.

De préférence, la teneur en oxygène dans l'enceinte du réacteur à la fin de l'étape 3 est inférieure ou égale à 1% en volume par rapport au volume total de l'enceinte du réacteur.

Selon un mode de réalisation préféré, le procédé selon l'invention comprend une étape préalable d'association des particules de silicium et du catalyseur.

De préférence, l'étape d'association des particules de silicium et du catalyseur comprend :
- la mise en suspension dans un solvant des particules de silicium et du catalyseur, suivi de
- l'évaporation du solvant.

Selon un mode de réalisation préféré, avant l'évaporation du solvant, la suspension contenant les particules de silicium et le catalyseur est agitée de manière à favoriser le contact entre les particules et le catalyseur.

De préférence, la suspension est mise sous agitation au moins 5 minutes, de préférence au moins 10 minutes, et encore plus préférentiellement au moins 15 minutes.

Le solvant utilisé pour la mise en suspension du catalyseur et des particules de silicium est de préférence choisi parmi : l'hexane, le toluène, l'acétone, l'éther de pétrole, le chloroforme, le dichlorométhane.

Avantageusement le solvant est l'hexane.

L'évaporation du solvant est réalisée selon tout protocole d'évaporation de solvant connu de l'homme du métier et adapté à l'évaporation du solvant utilisé.

Par exemple, dans le cas de l'hexane, l'évaporation du solvant peut être réalisée au moyen d'un évaporateur rotatif sous vide.

Selon un premier mode de réalisation, les particules de silicium, le catalyseur et la composition précurseur des nanofils de silicium sont introduits dans le réacteur sous la forme d'un mélange.

Selon un mode de réalisation préféré, le réacteur comprend au moins deux zones de chargement, une première zone permettant d'accueillir la composition précurseur des nanofils de silicium, et une seconde zone permettant d'accueillir les particules de silicium et le catalyseur.

Selon une première variante, la première zone de chargement et la seconde zone de chargement sont situées au même niveau dans l'enceinte du réacteur.

Selon une variante préférée, la seconde zone de chargement est surélevée par rapport à la première zone de chargement.

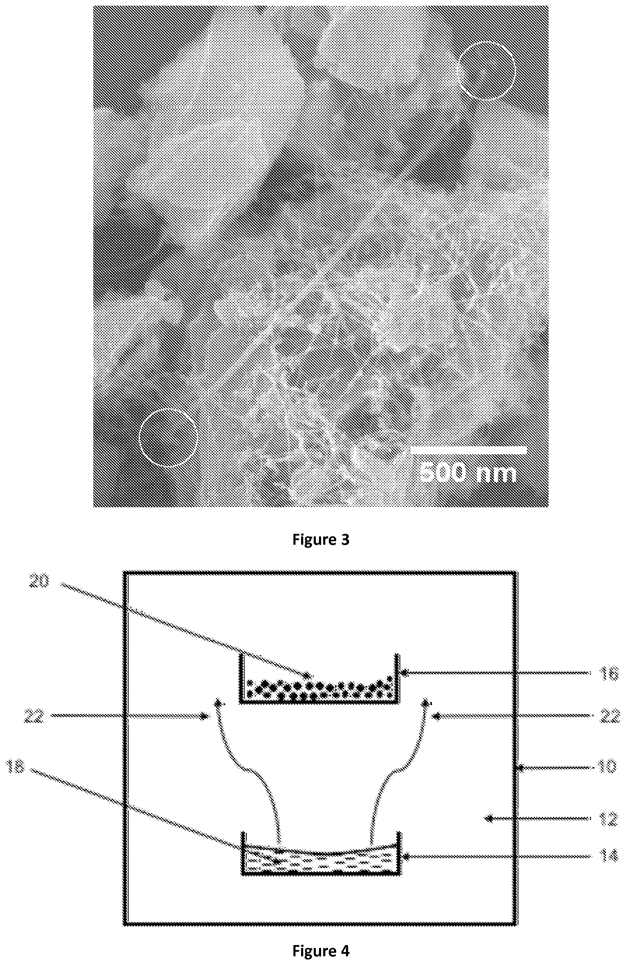

La figure 4 est une représentation schématique d'un réacteur utilisable dans le procédé de l'invention.

Se référant à la figure 4, le réacteur (10) comprend une enceinte (12). L'enceinte (12) du réacteur (10) comprend une première zone de chargement (14) et une seconde zone de chargement (16), la seconde zone de chargement (16) étant surélevée par rapport à la première zone de chargement (14). Dans la première zone de chargement (14) est chargée la composition précurseur des nanofils de silicium (18). Dans la seconde zone de chargement (16) sont chargés les particules de silicium et le catalyseur (20). Après avoir appauvri l'atmosphère du réacteur (10) en dioxygène par la mise sous vide du réacteur (10) à une pression égale à 10⁻¹ bar, le réacteur (10) est chauffé par l'application d'un traitement thermique, ce qui entraine la vaporisation de la composition précurseur des nanofils des silicium (18) située dans la première zone de chargement (14). La composition précurseur des nanofils de silicium (18) sous forme gazeuse remplit l'enceinte (12) et entre en contact avec les particules de silicium et le catalyseur (20) situés dans la seconde zone de chargement (16). Les flèches (22) schématisent le déplacement de la composition précurseur des nanofils de silicium (14) sous forme gazeuse à l'intérieur de l'enceinte (12) du réacteur (10). Au contact du catalyseur, le précurseur gazeux réagit pour former des nanofils de silicium.

De préférence, lorsqu'un matériau dopant est utilisé, le composé précurseur du matériau dopant est introduit dans la première zone de chargement, de préférence en mélange avec la composition précurseur des nanofils de silicium.

Le traitement thermique est réalisé à une température allant de 270°C à 600°C, de préférence de 350°C à 550°C, et encore plus préférentiellement de 400°C à 500°C.

Dans cette gamme de température, la composition précurseur des nanofils de silicium subit une pyrolyse, c'est-à-dire une décomposition thermique conduisant à la formation de vapeurs de pyrolyse, qui en contact avec le catalyseur, conduisent à la croissance des nanofils sur et autour des particules de silicium.

Au cours du traitement, la pression dans le réacteur peut augmenter du fait du traitement thermique. Par exemple, la pression peut monter à une pression allant de 10 à 70 bars, de préférence de 20 à 40 bars. Cette pression interne dépend du traitement thermique appliqué et n'est pas nécessairement contrôlée ou pilotée.

Le traitement thermique est réalisé sur une durée allant de 1 minute à 5 heures, de préférence de 10 minutes à 2 heures et encore plus préférentiellement de 30 minutes à 60 minutes.

Selon un mode de réalisation préféré, le procédé selon l'invention comprend une étape supplémentaire (6) de lavage du produit obtenu à l'étape (5).

Le produit obtenu à l'étape 5 est de préférence lavé avec un solvant organique, de préférence choisi parmi : le chloroforme, l'éthanol, le toluène, l'acétone, le dichlorométhane, l'éther de pétrole, et leurs mélanges.

Le produit brut obtenu à l'étape (5) est de préférence lavé au moins deux fois, de préférence au moins trois fois, et encore plus préférentiellement au moins quatre fois.

De préférence, après l'étape (6), le procédé comprend en outre une étape supplémentaire de séchage du produit obtenu.

Le séchage est par exemple réalisé en plaçant le produit au four, de préférence à une température supérieure à 50°C, encore plus préférentiellement supérieure à 70°C.

De préférence, le séchage est réalisé sur une durée allant de 15 minutes à 12 heures, de préférence de 15 minutes à 2 heures et encore plus préférentiellement de 15 minutes à 60 minutes

Selon un mode de réalisation avantageux, le procédé selon l'invention comprend après l'étape (5) ou (6) l'application d'au moins un cycle suivant :
(1') l'introduction dans l'enceinte du réacteur d'au moins :
   - le produit obtenu à l'étape (5) ou à l'étape (6), et
   - un catalyseur,
(2') l'introduction dans l'enceinte du réacteur d'une composition précurseur des nanofils de silicium,
(3') la diminution de la teneur en dioxygène dans l'enceinte du réacteur,
(4') l'application d'un traitement thermique,
(5') la récupération du produit, et éventuellement
(6') le lavage du produit obtenu.

De préférence, et selon ce mode de réalisation avantageux, le procédé selon l'invention comporte l'application de 1 à 10 cycles, de préférence de 1 à 5 cycles, et encore plus préférentiellement de 1 à 2 cycles.

Les conditions de réalisation et les modes de réalisation préférés des étapes (1'), (2'), (3'), (4'), (5') et (6') sont les mêmes que ceux, respectivement, des étapes (1), (2), (3), (4), (5) et (6).

A partir du deuxième cycle, le produit réintroduit dans le réacteur n'est plus le produit obtenu à l'étape (5) ou (6) mais le produit obtenu à la fin du cycle précédent, soit à l'étape (5') ou (6') du cycle précédent.

Ainsi, et selon ce mode de réalisation particulier, le procédé selon l'invention est appliqué plusieurs fois à une même portion de particules de silicium et permet l'obtention d'un matériau présentant un ratio massique nanofils de silicium/particules de silicium élevé.

Selon une variante, on peut utiliser plusieurs réacteurs placés en série et après la récupération et éventuellement le lavage du matériau obtenu en sortie d'un premier réacteur, procéder au second cycle de traitement dans le réacteur suivant.

Avantageusement, le procédé selon l'invention ne comporte pas de traitement des particules de silicium (par exemple par HF) conduisant à retirer la couche d'oxyde de silicium qui les enrobe, avant l'étape (1) d'introduction dans une enceinte d'un réacteur des particules de silicium et du catalyseur.

### Fonctionnalisation(s) éventuelle(s)

La mise en œuvre du procédé selon l'invention permet l'obtention d'un matériau comprenant des nanofils de silicium dont au moins une partie de la surface est fonctionnalisée par une couche organique.

Cette couche organique résulte de l'utilisations de silanes à fonctionnalisation organique comme composés précurseurs des nanofils de silicium.

Selon un mode de réalisation, le procédé selon l'invention comprend une ou plusieurs étapes supplémentaires de fonctionnalisation du produit obtenu par le dépôt d'au moins une couche fonctionnelle à la surface des nanofils de silicium.

Cette couche fonctionnelle peut être organique ou inorganique.

Par exemple, cette couche fonctionnelle peut être une couche de passivation contre l'attaque électrochimique du matériau intercalant, ou une couche électrochimiquement active pour le stockage de charges à la surface de l'électrode obtenue à partir du matériau selon l'invention. Notamment, cette couche fonctionnelle peut être déposée de sorte à entourer en tout ou partie les nanofils de silicium avec ou sans interposition de matériau intermédiaire.

Par exemple, on peut prévoir que le procédé comporte une étape supplémentaire de traitement thermique du mélange final de particules et de nanofils de silicium en présence d'une source de carbone pour former une couche conductrice. Cette couche améliore la conductivité électrique du produit final et son meilleur comportement en batteries Li-ion. Un tel traitement est bien connu de l'homme du métier, on en trouve des exemples notamment dans So Yeun Kim et al., ACS Appl. Mater. Interfaces, 2016, 8 (19), pp 12109-12117. Dans le procédé de l'invention, un tel traitement thermique du mélange final de particules et de nanofils de silicium en présence d'une source de carbone est appliqué de préférence à une température allant de 500 °C à 1000 °C, encore plus préférentiellement de 700 °C à 900 °C. La source de carbone peut être sous forme de gaz ou de liquide.

Le mélange final de particules et de nanofils de silicium auquel est appliqué le traitement thermique en présence d'une source de carbone est le mélange issu de l'application d'un ou de plusieurs cycles tels que décrits ci-dessus.

### Matériau obtenu

L'invention concerne également un matériau susceptible d'être obtenu par la mise en œuvre du procédé décrit ci-dessus.

Ce matériau est un matériau nanostructuré et comprend au moins des particules de silicium et des nanofils de silicium.

De préférence, les nanofils de silicium sont en contact avec la surface des particules de silicium.

Le matériau est préférentiellement obtenu sous la forme d'une poudre.

De préférence, le matériau nanostructuré a au moins une partie de sa surface fonctionnalisée par une couche organique.

En particulier, cette couche organique est formée lors de la décomposition du composé précurseur de silicium.

Par exemple, lorsque le composé précurseur des nanofils est le diphénylsilane Si(C₆H₅)₂H₂, la couche organique comprend des groupements phényles.

De préférence, la couche organique représente de 1 à 50% en masse par rapport à la masse totale des nanofils, de préférence de 5 à 25%, et encore plus préférentiellement de 5 à 15%.

De préférence, au moins 50% des nanofils de silicium ont une longueur strictement supérieure à 5 µm, de préférence strictement supérieure à 10 µm, et encore plus préférentiellement strictement supérieure à 15 µm.

De préférence, les nanofils de silicium ont un diamètre allant de 1 nm à 100 nm, plus préférentiellement allant de 10 nm à 100 nm, et encore plus préférentiellement allant de 10 nm à 50 nm.

Les nanofils au moins participent au caractère nanostructuré du matériau.

La taille des nanofils de silicium et leur diamètre peuvent être déterminés par de nombreuses techniques bien connues de l'homme du métier comme par exemple par l'analyse de clichés obtenus par microscopie électronique à balayage ou MEB d'un ou plusieurs échantillons.

Avantageusement, les nanofils de silicium ont un rapport d'aspect allant de 250 à 10 000, de préférence allant de 500 à 5 000, le rapport d'aspect étant défini comme le rapport entre la longueur moyenne et le diamètre moyen des nanofils de silicium.

De préférence, le rapport entre la longueur moyenne des nanofils de silicium et le diamètre moyen des particules de silicium est supérieur ou égal à 2, plus préférentiellement supérieur ou égal à 5, encore plus préférentiellement supérieur ou égal à 10 et avantageusement supérieur ou égal à 20.

De préférence, les nanofils de silicium et les particules de silicium sont liés par des liaisons physiques.

La surface des particules de silicium utilisées dans le procédé de l'invention est revêtue d'une couche d'oxyde native (teneur en oxygène variable) avant leur engagement dans la croissance des nanofils. Généralement, cette couche existe sur toutes les surfaces des particules de silicium qui ont été exposées à l'atmosphère ambiante, comme les particules de ce type disponibles commercialement.

Avantageusement, le procédé selon l'invention ne comporte pas de traitement (par exemple par HF) pour enlever cette couche, ou la réduire, avant de mélanger les particules de silicium avec les nanoparticules d'or. En conséquence, selon ce procédé, les nanoparticules d'or sont déposées sur la surface d'oxyde native. Pendant la croissance, même si la température dépasse le point eutectique (363°C), la fusion de l'or et du silicium n'a pas lieu car le silicium est enrobé, et isolé, par la couche d'oxyde natif. Il en résulte que les nanofils de silicium qui se forment à partir des nanoparticules d'or ne sont pas liés chimiquement à la surface des particules de silicium.

Au moins 10% des nanofils de silicium ne sont pas liés par leurs extrémités à la surface d'une particule de silicium, de préférence au moins 25%, et encore plus préférentiellement au moins 50%, encore mieux au moins 90 % et encore plus préférentiellement au moins 95%.

Préférentiellement, dans le matériau de l'invention, au moins 50 % des nanofils de silicium ne sont pas liés chimiquement à la surface des particules de silicium, encore mieux au moins 90 % et encore plus préférentiellement au moins 95%.

De préférence, le matériau selon l'invention présente un ratio massique nanofils de silicium sur particules de silicium allant de 1:100 à 95:100, de préférence allant de 5:100 à 80:100, et encore plus préférentiellement allant de 10:100 à 60:100.

### Utilisations

L'invention concerne également un procédé de fabrication d'une électrode comportant une étape de formation de ladite électrode à partir d'un matériau obtenu par la mise en œuvre du procédé selon l'invention. Cette étape de formation de l'électrode peut directement utiliser le produit obtenu par la mise en œuvre du procédé ou bien mettre en œuvre le procédé décrit précédemment.

De façon connue, on forme une encre à partir d'un liant, d'un matériau selon l'invention, et éventuellement un matériau carboné. L'encre est déposée sur un collecteur de courant puis séchée.

L'invention concerne plus particulièrement un procédé de fabrication d'une électrode comprenant au moins les étapes suivantes :
- la préparation d'un matériau selon l'invention,
- le préparation d'une encre à partir du matériau selon l'invention,
- le dépôt de l'encre au moins sur une partie d'une face d'un collecteur de courant, et
- le séchage de l'encre.

L'invention est également relative à une électrode utilisable dans un dispositif de stockage d'énergie, ladite électrode comprenant un collecteur de courant et au moins une couche active revêtant au moins une partie d'une face du collecteur, ladite couche active comprenant au moins un liant, un matériau selon l'invention, et éventuellement un matériau carboné.

Les liants sont bien connus de l'art antérieur, on peut notamment citer la carboxyméthylcellulose (CMC).

Le matériau selon l'invention peut ainsi être utilisé comme matériau actif dans les électrodes d'accumulateur électrochimique, en particulier dans les anodes de batteries lithium-ion. Il peut être utilisé comme matériau d'électrode de super-condensateur. En ce sens, l'invention est aussi relative à un élément de stockage d'énergie comprenant une électrode, notamment une anode, selon l'invention. Notamment ledit élément de stockage est une batterie au lithium-ion. La très grande surface spécifique du réseau interconnecté conducteur de nanofils permet à l'électrode selon l'invention de répartir un flux de charge électrique de manière optimale à l'ensemble du matériau actif. Cette configuration assure une densité de courant admissible très importante, tant dans les batteries que dans les condensateurs. Dans les batteries, elle permet la conservation de l'intégrité du matériau grâce à une répartition homogène du flux d'ion lithiums et des contraintes mécaniques résultant de leur insertion/désinsertion. L'interconnexion électrique est assurée d'une part par les contacts entre les nanofils, mais aussi par le contact entre les nanofils et les particules de silicium sur lesquelles ils ont crû. Un contrôle facile du ratio entre le composé précurseur des nanofils et les particules permet la synthèse de matériaux avec des cyclabilités choisies. II a été évoqué ci-avant que les nanofils peuvent être dopés durant leur croissance, ou après leur croissance. Par dopage, la conductivité des nanofils peut être augmentée et il est alors possible de former des nanofils dopés dont la conductivité est proche de celle des métaux dans les cas extrêmes. Cette augmentation de la conductivité des nanofils est avantageuse en ce qu'elle permet de réduire significativement la résistance des nanofils à l'insertion du lithium. De cette façon, l'électrode selon l'invention améliore la capacité aux plus fortes vitesses de charge, d'après Chen et al., publié dans Electrochimica Acta (2011) 56, 5210-5213.

Les particules de silicium permettent, d'une part, de limiter la mobilité du catalyseur pendant la croissance des nanofils, de cette façon, les particules de catalyseur restent de petite taille et les nanofils de silicium de l'invention ont un diamètre homogène et fin. D'autre part, les particules de silicium permettent d'améliorer les caractéristiques du matériau selon l'invention lorsqu'il est utilisé comme matériau d'anode dans des batteries lithium-ion. Par exemple, la croissance des nanofils de silicium à la surface des particules de silicium permet la préparation d'un matériau nanostructuré ne présentant pas les risques liés aux nanopoudres, notamment lors de leur manipulation.

La très grande surface spécifique, alliée à un éventuel dopage adéquat des nanofils pour assurer une meilleure conductivité du réseau et un éventuel traitement de surface adéquat pour assurer une grande stabilité chimique à long terme du réseau, permet d'obtenir des super-condensateurs, micro-supercondensateurs ou ultra-micro-super-condensateurs avec une grande densité d'énergie. Par ailleurs, le diamètre des nanofils très fin et homogène assure une grande stabilité mécanique de l'électrode lors des cycles de lithiation/délithiation dans les batteries lithium-ion, et permet d'obtenir des anodes de batteries lithium-ion à base de particules de silicium plus durables. En effet, préférentiellement, les nanofils de silicium présentent à la fois un diamètre fin, c'est-à-dire inférieur à 100, de préférence inférieur à 50 nm, et homogène sur l'ensemble des nanofils, c'est-à-dire présentant moins de 50% d'écart type dans la distribution des diamètres, et une grande longueur, supérieure à 10 µm. Cette qualité confère au produit obtenu une excellente aptitude au cyclage : le changement de volume d'un nanofil s'effectue pour l'essentiel le long de son diamètre, où la dimension nanométrique permet la relaxation des contraintes mécaniques. L'élément de stockage d'énergie électrique incluant ladite électrode présente une durabilité en cyclage accrue par rapport à une électrode constituée de particules de silicium.

Les différents modes de réalisation, variantes, les préférences et les avantages décrits ci-dessus pour chacun des objets de l'invention s'appliquent à tous les objets de l'invention et peuvent être pris séparément ou en combinaison.

### Figures :

Figure 1 : photographies obtenues par microscopie électronique à balayage (MEB) de particules de silicium et de matériaux obtenus par la mise en œuvre du procédé selon l'invention.
La figure la est une photographie obtenue à partir d'un échantillon de particules de silicium.
La figure 1b est une photographie obtenue à partir d'un échantillon du matériau A selon l'invention.
La figure 1c est une photographie obtenue à partir d'un échantillon du matériau B selon l'invention.
La figure 1d est une photographie obtenue à partir d'un échantillon du matériau C₂ selon l'invention.
Figure 2 : agrandissements de la photographie de la figure 1d centrés d'une part sur un nanofil isolé (Figure 2a) et d'autre part sur un groupe de nanofils (Figure 2b).
Figure 3 : agrandissement de la figure 1b.
Figure 4 : représentation schématique d'un réacteur utilisable dans le procédé de l'invention.

L'invention est illustrée par les exemples suivants donnés à titre non limitatif.

### Partie expérimentale :

Dans ces Exemples, les parties et pourcentages sont exprimés en poids sauf indication contraire.

### Matériel :

- particules de silicium dont la taille moyenne est égale à 500 nm, disponibles commercialement auprès de la société SkySpring Nanomaterials (CAS : 7440-21-3),
- diphénylsilane Si(C₆H₅)₂H₂, disponible commercialement auprès de la société Sigma-Aldrich (CAS : 775-12-2),
- noir de carbone, disponible commercialement auprès de la société Imerys, sous la référence commerciale Timcal Super C65 ® (CAS : 1333-86-4),
- carboxyméthylcellulose (CMC), disponible commercialement auprès de la société Alfa-Aesar (CAS : 9004-32-4),
- électrolyte de hexafluorophosphate de lithium LiPF₆ (1M) dissous dans un mélange de carbonate d'éthylene (EC) et de diéthylcarbonate (DEC) (1:1 en volume) avec ajout de carbonate de fluoroéthylène (FEC, 10% en masse) et de carbonate de vinylène (VC, 2% en masse), disponible commercialement auprès de la société Solvionic.

Dans les exemples qui suivent, la synthèse des matériaux est réalisée dans deux réacteurs différents dont les principales caractéristiques sont données ci-dessous :
*Réacteur 1* : Le *réacteur 1* est constitué d'un tube en verre pyrex (diamètre extérieur = 16 mm, épaisseur du verre = 1 mm) présentant une constriction à 5 cm environ du fond.
*Réacteur 2* : Le *réacteur 2* est un réacteur en acier (volume interne =1L, diamètre = 100 mm et hauteur = 125 mm).

### I- Préparation des matériaux

### a. Synthèse des nanoparticules d'or

Les nanoparticules d'or sont synthétisées selon le protocole décrit dans M. BRUST et al., J. Chemical Society, Chemical Communications, 7(7) :801-802, 1994.

Le diamètre des nanoparticules d'or obtenues est de 1 à 4 nm. Leur surface est recouverte de molécules de dodécanethiol.

Une solution mère de nanoparticules d'or à 50 mg/mL est préparée par mise en suspension des nanoparticules d'or préparées précédemment dans du toluène.

### b. Association des particules de silicium et du catalyseur

Les particules de silicium sont mises en suspension dans de l'hexane sec (10 mL d'hexane pour 100 mg de particules de silicium). La solution mère de nanoparticules d'or préparée précédemment est ensuite ajoutée à la suspension de particules de silicium sous agitation. Le mélange obtenu est agité pendant 15 minutes, puis le solvant est évaporé à l'aide d'un évaporateur rotatif. Le solide sec obtenu est transféré dans le réacteur.

### c. Croissance des nanofils

Cette étape c) correspond aux étapes (1) à (5) du procédé selon l'invention.

En fonction du réacteur utilisé, on distingue deux protocoles différents pour procéder à la croissance des nanofils.

### c1 - Croissance dans le réacteur 1

Le solide sec obtenu à l'étape b est transféré dans un tube à essai en verre pyrex (diamètre = 11 mm et longueur = 75 mm).

Dans le fond du réacteur 1, on dépose le diphénylsilane Si(C₆H₅)₂H₂, puis le tube à essai contenant les particules de silicium imprégnées de nanoparticules d'or. Le réacteur 1 est ensuite placé sur une rampe à vide et scellé sous vide au chalumeau à 15 cm du fond environ.

Le réacteur est ensuite placé dans un four à 450°C pendant 1h, puis il est sorti du four et laissé refroidir à température ambiante pendant 30 minutes. Enfin, le réacteur est ouvert en utilisant un couteau à verre afin d'en extraire le produit brut.

### c2 - Croissance dans le réacteur 2

Le solide sec obtenu à l'étape b est transféré dans un cristallisoir en verre pyrex (diamètre = 80 mm, hauteur = 40 mm).

Dans le fond du réacteur 2, on dépose le diphénylsilane Si(C₆H₅)₂H₂. Puis, un bécher vide en verre pyrex (diamètre = 60 mm, hauteur = 60 mmm) est déposé dans le réacteur, et par-dessus le bécher, le cristallisoir contenant les particules de silicium imprégnées de nanoparticules d'or. Le réacteur 2 est ensuite fermé hermétiquement et branché à une pompe pour générer le vide à l'intérieur du réacteur.

Le réacteur est ensuite chauffé par une résistance électrique au contact de la paroi extérieure du réacteur. Le cycle de chauffage est le suivant : une rampe de chauffage de 30 minutes entre 20°C et 450°C, un plateau de 60 minutes à 450°C, puis la coupure du chauffage et le refroidissement du réacteur à température ambiante pendant 3 heures. Enfin, le réacteur est ouvert pour récupérer le produit brut.

### d. Lavage du produit obtenu

Cette étape correspond à l'étape (6) décrite précédemment.

Le produit obtenu est ensuite lavé par portion de 2g selon le protocole suivant :
Le produit est transféré dans un tube de centrifugation en plastique de 45 mL dans lequel 15 mL de chloroforme sont ajoutés. La suspension dans le chloroforme est alors dispersée au bain à ultrasons pendant 5 minutes avant d'être centrifugée pendant 5 minutes à 8000 rpm (correspondant à 3500 g). Après centrifugation, le solvant est retiré et est remplacé par une nouvelle portion de chloroforme (15 mL).

Au total, cette opération de lavage est répétée 3 fois. Lors du quatrième et dernier lavage, les 15 mL de chloroforme sont remplacés par un mélange de 5 mL de chloroforme et 15 mL d'éthanol.

Le produit lavé est ensuite séché dans un four à 80°C afin d'obtenir une poudre grise.

### e. Répétition éventuelle

Dans certaines variantes, le produit obtenu à la fin de l'étape d est réintroduit dans le réacteur afin de subir une ou plusieurs phases supplémentaires de croissance des nanofils correspondant à la répétition des étapes b, c et d décrites ci-dessus.

Le matériau obtenu à la fin de l'étape d d'un cycle n remplace alors les particules de silicium et il est introduit dans le réacteur à l'étape b du cycle suivant n+1. Ainsi, une même portion de particules de silicium subit plusieurs phases de croissance.

### f. Matériaux obtenus

Les matériaux A, B, C₁ et C₂ sont préparés selon le protocole précédent.

Les caractéristiques du procédé mis en œuvre et des matériaux obtenus sont données dans le tableau 1 suivant :

**Tableau 1**

| **Matériau** | **A** | **B** | **C₁** | **C₂⁽⁴⁾** |
|---|---|---|---|---|
| *Caractéristiques du procédé mis en œuvre* | | | | |
| **Réacteur utilisé** | 1 | 1 | 2 | 2 |
| **Masse de SiP⁽¹⁾ introduite dans le réacteur** | 100 mg | 100 mg | 5 g | - |
| **Volume de la solution mère de AuNP⁽²⁾** | 20 µL | 20 µL | 2,5 mL | 2,5 mL |
| **Masse de diphénylsilane** | 368 mg | 368 mg | 99,3 g | 99,3 g |
| **Nombre de cycles⁽³⁾** | 1 | 3 | 1 | 2 |

| *Caractéristiques du produit obtenu* | | | | |
|---|---|---|---|---|
| **Masse de produit obtenu** | 112 mg | 118 mg | 7,9 g | 6,3 g |
| **Masse totale de SiP⁽⁵⁾** | 100 mg | 100 mg | 5g | 2,5 g |
| **Masse totale de nanofils⁽⁵⁾** | 12 mg | 18 mg | 2,9 g | 3,8 g |
| **% massique de SiP⁽⁶⁾** | 90 | 85 | 63 | 40 |
| **% massique de nanofils⁽⁶⁾** | 10 | 15 | 37 | 60 |

| | | | | |
|---|---|---|---|---|
| (1) SiP : particules de silicium (2) AuNP : nanoparticules d'or (3) le nombre de fois où les étapes b, c et d ont été réalisées sur une même portion de particules de silicium (4) Le matériau C₂ est préparé à partir de 3,8g du matériau C₁. Ainsi, le matériau C₂ est obtenu après deux cycles de croissance : le premier cycle à partir de particules de silicium SiP pour former le matériau C₁ et le second cycle à partir du matériau C₁ pour former le matériau C₂. (5) Masses de particules de silicium et/ou de nanofils de silicium présents dans le matériau obtenu. (6) Pourcentages massiques des particules de silicium et/ou des nanofils de silicium présents dans le matériau obtenu, les pourcentages étant exprimés par rapport à la masse totale du matériau. | | | | |

### II- Caractérisation du matériau

La topologie microscopique des matériaux obtenus est observée à l'aide d'un microscope électronique à balayage (MEB) Zeiss Ultra 55.

### 1/ Aspect général des matériaux obtenus

Les images obtenues par microscopie électronique à balayage (MEB) sont données en annexe.
La figure la est une photographie obtenue au moyen du MEB à partir d'un échantillon de particules de silicium.

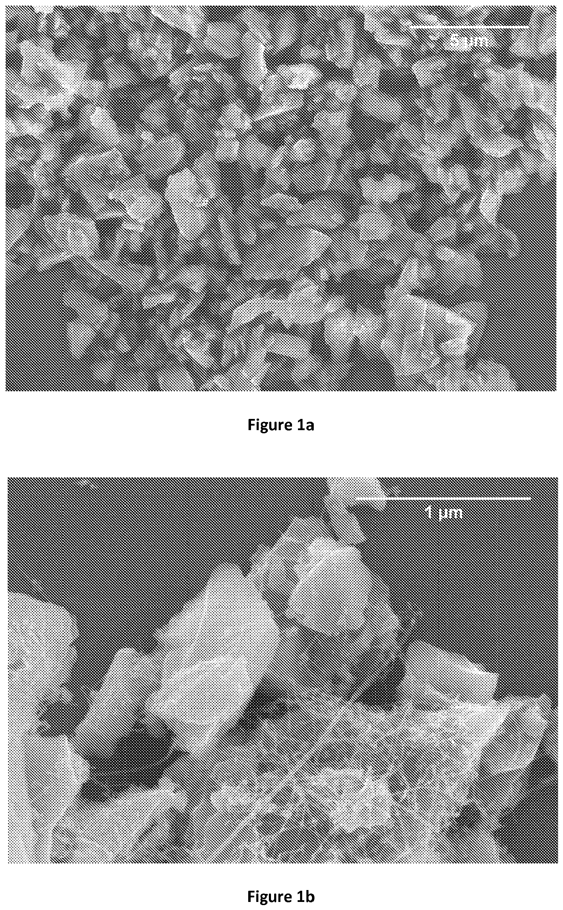

La figure 1b est une photographie obtenue au moyen du MEB à partir d'un échantillon du matériau A.

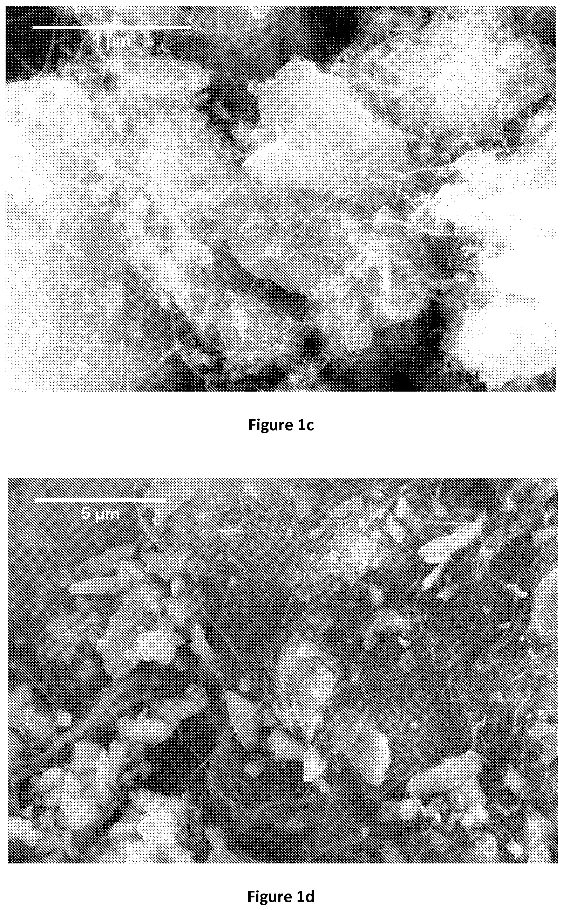

La figure 1c est une photographie obtenue au moyen du MEB à partir d'un échantillon du matériau B.
La figure 1d est une photographie obtenue au moyen du MEB à partir d'un échantillon du matériau C₂.

Sur la figure la, on observe que les particules de silicium ne présentent aucun nanofils de silicium à leur surface. L'échantillon n'est composé que de particules de silicium.

Sur les figures 1b, 1c et 1d, on observe des particules de silicium autour desquelles sont enchevêtrés une pluralité de nanofils de silicium, avec lesquels les particules sont en contact.

On observe également sur la figure 1c une plus grande quantité de nanofils de silicium enchevêtrés autour des particules de silicium que sur les particules observées la figure 1b. De même, on observe sur la figure 1d une plus grande quantité de nanofils de silicium enchevêtrés autour des particules de silicium que sur les particules observées sur la figure 1c.

A partir de ces quatre figures, on constate donc que le procédé mis en œuvre précédemment a permis la croissance de nanofils de silicium à la surface des particules de silicium.

De plus, on constate que la succession de plusieurs phases de croissance sur une même portion de particules de silicium permet d'accroitre le nombre de nanofils de silicium. On constate que l'utilisation du réacteur 2 permet d'accroitre la longueur des nanofils de silicium.

### 2/ Longueur des nanofils

La longueur des nanofils de silicium est déterminée à partir des images du matériau C₂.

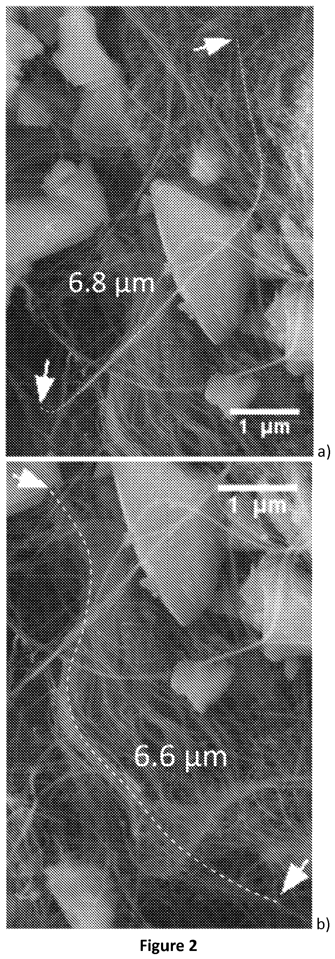

Les figures 2a et 2b sont des agrandissements du cliché de la figure 1d. La figure 2a est centrée sur un nanofil isolé et la figure 2b sur un groupe de nanofils.

Sur ces deux figures, les lignes discontinues permettent d'identifier les nanofils étudiés et les flèches permettent de pointer les extrémités de la partie visible de ces nanofils.

La longueur de ces lignes discontinues est alors considérée comme la longueur observable minimale des nanofils étudiés.

On obtient ainsi les résultats suivants :
- à partir de la figure 2a, longueur observable du nanofil de silicium = 6,8µm.
- à partir de la figure 2b, longueur observable du groupe de nanofils de silicium = 6,6 µm.

La longueur moyenne observable des nanofils dans un matériau est déterminée à partir de la mesure de la longueur d'une vingtaine de nanofils ou de groupes de nanofils présents dans le matériau.

### 3/ Diamètre des nanofils

Le diamètre moyen des nanofils est estimé égal à 13,3 nm, avec un écart-type de 3,1 nm, à partir de la mesure d'une centaine de nanofils.

### 4/ Liaison particules/nanofils

On observe ensuite l'agencement à l'échelle microscopique du matériau obtenu et plus particulièrement l'agencement entre les particules de silicium et les nanofils de silicium synthétisés.

La figure 3 est un agrandissement de la photographie 1b, centrée sur un nanofil de silicium dont les extrémités sont situées au centre des deux cercles.

A partir de cette photographie, on constate que les extrémités du nanofil ne sont liées à aucune particule de silicium. En effet, le nanofil de silicium est lié à la surface d'une particule de silicium par sa partie centrale.

### III- Performances électrochimiques

Les performances électrochimiques des matériaux obtenus précédemment sont ensuite évaluées en préparant des cellules dans lesquelles l'anode comprend l'un des matériaux préparés précédemment.

### 1. Préparation d'une cellule

Chaque matériau obtenu est mélangé à l'aide d'un mortier avec du noir de carbone comme additif conducteur, de la carboxyméthylcellulose (CMC) comme liant, et de l'eau distillée comme solvant afin d'obtenir une encre. Les masses de matières sèches respectent le ratio 50:25:25 (Si:C65:CMC). L'eau distillée ajoutée représente environ 90% de la masse totale de l'encre, elle permet d'ajuster la viscosité de l'encre.

Une électrode est ensuite préparée par coulage en bande de l'encre sur une feuille de cuivre de 25 µm d'épaisseur. Après séchage à l'étuve à une température de 50°C, la feuille de cuivre est découpée au moyen d'un emporte-pièce pour former un disque de 15 mm de diamètre. Une demi-cellule est ensuite constituée par l'empilement d'une électrode de lithium métallique commercialisée par la société Alfa-Aesar (disque de 15 mm de diamètre, 0,75 mm d'épaisseur), d'un séparateur Whatman® (fibre de verre, 240 µm d'épaisseur), d'un séparateur Celgard® (membrane de 3 couches polypropylène-polyéthylène-polypropylène, 25 µm d'épaisseur), et de l'électrode préparée à partir du matériau synthétisé précédemment. Les séparateurs sont imbibés d'un électrolyte d'hexafluorophosphate de lithium LiPF6 à 1M dans EC:DEC (1/1 en volume) avec addition de FEC (10% massique) et de VC (2% massique). Puis le dispositif est scellé dans une presse pour pile bouton entre deux capots en acier inoxydable constituant les bornes positive et négative, avec un disque d'acier inoxydable de 15 mm de diamètre et un ressort pour maintenir une pression uniforme sur l'aire du dispositif.

La cellule **P_{A}**, la cellule **P_{B}** et la cellule **P_{C2}** ont ainsi été préparées, respectivement à partir des matériaux **A, B** et **C₂** préparés précédemment.

Une cellule témoin **P_{T}** a également été préparée à partir de particules de silicium n'ayant subi aucune modification. La cellule **P_{T}** a donc été préparée selon le même protocole que celui décrit ci-dessus à l'exception que le matériau selon l'invention a été remplacé par des particules de silicium.

Pour la fabrication de la cellule témoin **P_{T}**, nous avons utilisé les particules de silicium utilisées pour la fabrication du matériau de l'invention.

### 2. Mesure des propriétés électrochimiques

Les performances des cellules **P_{A}**, **P_{B}**, **P_{C2}** et **P_{T}**, préparées précédemment, sont déterminées par cyclage galvanostatique, au moyen d'un cycleur Biologic BCS-805 équipé de 8 voies disposants de deux électrodes chacune.

Chaque cellule est lithiée une première fois jusqu'à atteindre une différence de potentiel de 10 mV et avec un régime de courant égal à C/20, c'est-à-dire avec un courant permettant de lithier en 20 heures une électrode ayant la capacité théorique du silicium (3579 mA.h/g_{Si}). La première délithiation est réalisée jusqu'à l'obtention d'une différence de potentiel de 1 V et avec un régime de courant également égal à C/20. Les cycles galvanostatiques suivants sont réalisés entre 1 V et 10 mV à 1C, c'est-à-dire avec un courant permettant de lithier/délithier en 1 heure une électrode ayant la capacité théorique du silicium.

La cyclabilité du matériau utilisé dans chaque cellule est ensuite évaluée à partir de l'évolution de la capacité réversible, c'est-à-dire la capacité lors de la délithiation du silicium. La capacité initiale correspond à la capacité réversible à 1C lorsque celle-ci se stabilise à sa valeur maximale au bout de 25 cycles pour la cellule P_{A}, au bout de 2 à 3 cycles pour les cellules P_{B} et P_{C2}. La capacité de la cellule témoin P_{T} ne stabilisant pas et chutant continuellement, nous rapportons la capacité lors du premier cycle à 1C. Les différences de capacité initiale sont dues en partie à des masses d'électrode par unité de surface différentes, et en partie à des matériaux actifs de natures différentes (surface spécifique, compacité, etc.).

L'évolution de la capacité réversible est caractérisée par deux limites relatives à la valeur de la capacité initiale. Nous rapportons le nombre de cycles au bout duquel la capacité réversible est inférieure à 80% de la capacité initiale, puis le nombre de cycles au bout duquel la capacité réversible est inférieure à 50% de la capacité initiale.

Les résultats obtenus pour chacune des cellules sont présentés dans le tableau 2 suivant :

**Tableau 2**

| Cellule | **P_{A}** | **P_{B}** | **P_{C2}** | **P_{T}** |
|---|---|---|---|---|
| Capacité initiale (mA.h/g_{Si}) | 960 | 1470 | 1760 | 2440 |
| Masse d'électrode (mg/cm²) | 0,92 | 0,53 | 0,45 | 1,22 |
| Limite 80% (nombre de cycles) | 99 | 99 | 1071 | 5 |
| Limite 50% (nombre de cycles) | 394 | 848 | >1800 | 12 |

La capacité de la cellule témoin **P_{T}** décroit au fur et à mesure des cycles de charge et décharge. Elle a diminué de 20% au bout de 5 cycles et de 50% au bout de 12 cycles.

La capacité réversible des cellules **P_{A}** et **P_{B}** décroit également au fur et à mesure des cycles mais de manière plus lente. Au bout de 99 cycles de charge/décharge, la capacité réversible des piles **P_{A}** et **P_{B}** n'a diminué que de 20%. Elle diminue ensuite plus fortement pour la cellule **P_{A}**, de 50% au bout de 394 cycles, que pour la cellule P_{B}, de 50% au bout de 848 cycles.

En ce qui concerne la cellule **P_{C2}**, sa capacité réversible n'a diminué de 20% qu'au bout de 1071 cycles. Même après 1800 cycles, elle est toujours supérieure à 50% de la capacité initiale.

Le procédé selon l'invention permet donc l'obtention de matériaux utilisables comme matériau actif dans une batterie lithium-ion et présentant une cyclabilité améliorée par rapport aux particules de silicium de l'art antérieur.

## Revendications

1. Procédé de préparation d'un matériau comprenant au moins des particules de silicium et des nanofils de silicium, ledit procédé comprenant au moins les étapes suivantes :
(1) l'introduction dans une enceinte d'un réacteur d'au moins :
- des particules de silicium, et
- un catalyseur,
(2) l'introduction dans l'enceinte du réacteur d'une composition précurseur des nanofils de silicium, qui comprend au moins un composé précurseur des nanofils de silicium choisi parmi un composé silane ou un mélange de composés silanes,
(3) la diminution de la teneur en dioxygène dans l'enceinte du réacteur,
(4) l'application d'un traitement thermique à une température allant de 270°C à 600°C sur une durée allant de 1 minute à 5 heures, et
(5) la récupération du produit.

2. Procédé selon la revendication 1, comprenant en outre une étape (6) de lavage du produit obtenu à l'issue de l'étape (5).

3. Procédé selon l'une quelconque des revendications précédentes, dans lequel le traitement thermique est à une température allant de 350°C à 550°C.

4. Procédé selon l'une quelconque des revendications précédentes, dans lequel les particules de silicium de l'étape (1) sont recouvertes par une couche d'oxyde de silicium.

5. Procédé selon l'une quelconque des revendications précédentes, comportant après l'étape (5) ou après l'étape (6) l'application d'au moins un cycle suivant :
(1') l'introduction dans l'enceinte du réacteur d'au moins :
- le produit obtenu à l'étape (5) ou à l'étape (6), et
- un catalyseur,
(2') l'introduction dans le réacteur d'une composition précurseur des nanofils de silicium,
(3') la diminution de la teneur en dioxygène dans l'enceinte du réacteur, et
(4') l'application d'un traitement thermique, et
(5') la récupération du produit.

6. Procédé selon la revendication précédente, comportant l'application de 1 à 10 cycles.

7. Procédé selon l'une quelconque des revendications précédentes, qui comporte une étape supplémentaire de traitement thermique du mélange final de particules et de nanofils de silicium en présence d'une source de carbone.

8. Matériau susceptible d'être obtenu par la mise en œuvre d'un procédé selon l'une quelconque des revendications 1 à 7, dans lequel au moins 10% des nanofils de silicium ne sont pas liés par leurs extrémités à la surface d'une particule de silicium.

9. Matériau selon la revendication 8, dans lequel au moins 25% des nanofils de silicium ne sont pas liés par leurs extrémités à la surface d'une particule de silicium.

10. Matériau selon la revendication 8 ou selon la revendication 9, dans lequel au moins 50 % des nanofils de silicium ne sont pas liés chimiquement à la surface des particules de silicium.

11. Matériau selon l'une quelconque des revendications 8 à 10, dans lequel au moins 50% des nanofils de silicium ont une longueur strictement supérieure à 5 µm.

12. Matériau selon l'une quelconque des revendications 8 à 11, dans lequel le rapport entre la longueur moyenne et le diamètre moyen des nanofils de silicium est de 250 à 10 000.

13. Matériau selon l'une quelconque des revendications 8 à 12, dans lequel le rapport entre la longueur moyenne des nanofils de silicium et le diamètre moyen des particules de silicium est supérieur ou égal à 2.

14. Electrode utilisable dans un dispositif de stockage d'énergie comprenant au moins un collecteur de courant et une couche de matière active, la couche de matière active comprenant au moins un liant et un matériau selon l'une quelconque des revendications 8 à 13.

15. Dispositif de stockage d'énergie comprenant au moins une électrode selon la revendication 14.

## Patentansprüche

1. Verfahren zur Herstellung eines Materials, das mindestens Siliciumpartikel und Silicium-Nanodrähte umfasst, wobei das Verfahren mindestens die folgenden Schritte umfasst:
(1) Einführen mindestens von Folgendem in eine Kammer eines Reaktors:
- Siliciumpartikel und
- einen Katalysator,
(2) Einführen einer Vorläuferzusammensetzung der Silicium-Nanodrähte, die mindestens eine Vorläuferverbindung der Silicium-Nanodrähte umfasst, die unter einer Silanverbindung oder einem Gemisch aus Silanverbindungen gewählt ist, in die Kammer des Reaktors,
(3) Verringern des Disauerstoffgehalts in der Kammer des Reaktors,
(4) Anwenden einer Wärmebehandlung bei einer Temperatur von 270 °C bis 600 °C über eine Dauer von 1 Minute bis 5 Stunden und
(5) Rückgewinnen des Produkts.

2. Verfahren nach Anspruch 1, das ferner einen Schritt (6) des Spülens des nach Schritt (5) erhaltenen Produkts umfasst.

3. Verfahren nach einem der vorhergehenden Ansprüche, bei dem die Wärmebehandlung bei einer Temperatur von 350 °C bis 550 °C erfolgt.

4. Verfahren nach einem der vorhergehenden Ansprüche, bei dem die Siliciumpartikel von Schritt (1) mit einer Siliciumoxidschicht überzogen sind.

5. Verfahren nach einem der vorhergehenden Ansprüche, das nach Schritt (5) oder nach Schritt (6) das Anwenden mindestens eines folgenden Zyklus beinhaltet:
(1') Einführen mindestens von Folgendem in eine Kammer eines Reaktors:
- das in Schritt (5) oder in Schritt (6) erhaltene Produkt und
- einen Katalysator,
(2') Einführen einer Vorläuferzusammensetzung der Silicium-Nanodrähte in den Reaktor,
(3') Verringern des Disauerstoffgehalts in der Kammer des Reaktors und
(4') Anwenden einer Wärmebehandlung und
(5') Rückgewinnen des Produkts.

6. Verfahren nach dem vorhergehenden Anspruch, das die Anwendung von 1 bis 10 Zyklen beinhaltet.

7. Verfahren nach einem der vorhergehenden Ansprüche, das einen zusätzlichen Schritt der Wärmebehandlung des Endgemisches aus Siliciumpartikeln und -Nanodrähten in Gegenwart einer Kohlenstoffquelle beinhaltet.

8. Material, das durch die Implementierung eines Verfahrens nach einem der Ansprüche 1 bis 7 erhältlich ist und bei dem mindestens 10 % der Silicium-Nanodrähte an ihren Enden nicht an die Oberfläche eines Siliciumpartikels gebunden sind.

9. Material nach Anspruch 8, bei dem mindestens 25 % der Silicium-Nanodrähte an ihren Enden nicht an die Oberfläche eines Siliciumpartikels gebunden sind.

10. Material nach Anspruch 8 oder nach Anspruch 9, bei dem mindestens 50 % der Silicium-Nanodrähte nicht chemisch an die Oberfläche der Siliciumpartikel gebunden sind.

11. Material nach einem der Ansprüche 8 bis 10, bei dem mindestens 50 % der Silicium-Nanodrähte eine Länge von strikt mehr als 5 µm haben.

12. Material nach einem der Ansprüche 8 bis 11, bei dem das Verhältnis zwischen der mittleren Länge und dem mittleren Durchmesser der Silicium-Nanodrähte 250 bis 10.000 beträgt.

13. Material nach einem der Ansprüche 8 bis 12, bei dem das Verhältnis zwischen der mittleren Länge der Silicium-Nanodrähte und dem mittleren Durchmesser der Siliciumpartikel 2 oder mehr beträgt.

14. Elektrode, die in einer Energiespeichervorrichtung verwendbar ist, die mindestens einen Stromkollektor und eine Schicht aus aktivem Stoff umfasst, wobei die Schicht aus aktivem Stoff mindestens ein Bindemittel und ein Material nach einem der Ansprüche 8 bis 13 umfasst.

15. Energiespeichervorrichtung, die mindestens eine Elektrode nach Anspruch 14 umfasst.

## Claims

1. A process for the preparation of a material comprising at least silicon particles and silicon nanowires, said process comprising at least the following stages:
(1) the introduction, into a chamber of a reactor, of at least:
- silicon particles, and
- a catalyst,
(2) the introduction, into the chamber of the reactor, of a precursor composition of the silicon nanowires which comprises at least one precursor compound of the silicon nanowires chosen from a silane compound or a mixture of silane compounds,
(3) the decrease in the content of molecular oxygen in the chamber of the reactor,
(4) the application of a heat treatment at a temperature ranging from 270°C to 600°C, and
(5) the recovery of the product.

2. The process as claimed in claim 1, additionally comprising a stage (6) of washing the product obtained on conclusion of stage (5).

3. The process as claimed in either one of the preceding claims, in which the heat treatment is at a temperature ranging from 350°C to 550°C.

4. The process as claimed in any one of the preceding claims, in which the silicon particles of stage (1) are covered with a layer of silicon oxide.

5. The process as claimed in any one of the preceding claims, comprising, after stage (5) or after stage (6), the application of at least one following cycle:
(1') the introduction, into the chamber of the reactor, of at least:
- the product obtained in stage (5) or in stage (6), and
- a catalyst,
(2') the introduction, into the reactor, of a precursor composition of the silicon nanowires,
(3') the decrease in the content of molecular oxygen in the chamber of the reactor, and
(4') the application of a heat treatment, and
(5') the recovery of the product.

6. The process as claimed in the preceding claim, comprising the application of 1 to 10 cycles.

7. The process as claimed in any one of the preceding claims, which comprises an additional stage of heat treatment of the final mixture of silicon nanowires and particles in the presence of a carbon source.

8. A material capable of being obtained by the implementation of a process as claimed in any one of claims 1 to 7, in which at least 10% of the silicon nanowires are not bonded via their ends to the surface of a silicon particle.

9. The material as claimed in claim 8, in which at least 25% of the silicon nanowires are not bonded via their ends to the surface of a silicon particle.

10. The material as claimed in claim 8 or as claimed in claim 9, in which at least 50% of the silicon nanowires are not chemically bonded to the surfaces of the silicon particles.

11. The material as claimed in any one of claims 8 to 10, in which at least 50% of the silicon nanowires have a length strictly of greater than 5 µm.

12. The material as claimed in any one of claims 8 to 11, in which the ratio of the mean length to the mean diameter of the silicon nanowires is from 250 to 10 000.

13. The material as claimed in any one of claims 8 to 12, in which the ratio of the mean length of the silicon nanowires to the mean diameter of the silicon particles is greater than or equal to 2.

14. An electrode which can be used in an energy storage device comprising at least one current collector and a layer of active material, the layer of active material comprising at least one binder and a material as claimed in any one of claims 8 to 13.

15. An energy storage device comprising at least one electrode as claimed in claim 14.
